# EUROPÄISCHE PATENTSCHRIFT

(11) **EP 2 771 120 B1**
(45) Veröffentlichungstag und Bekanntmachung des Hinweises auf die Patenterteilung: **05.07.2017**
(21) Anmeldenummer: 12772713.9
(22) Anmeldetag: 20.09.2012
(51) Int. Cl.: B02C 19/18

(54) **VERFAHREN UND VORRICHTUNG ZUM ZERLEGEN EINES RECYCLINGGUTES**
METHOD AND DEVICE FOR THE DISINTEGRATION OF A RECYCLABLE ITEM
PROCÉDÉ ET DISPOSITIF DE DÉCOMPOSITION D'UN ARTICLE À RECYCLER

(30) Priorität: 26.10.2011 DE 102011116921
(43) Veröffentlichungstag der Anmeldung: 03.09.2014
(73) Patentinhaber: ImpulsTec GmbH, 01129 Dresden (DE)
(72) Erfinder: MÜLLER, Tim, 01458 Ottendorf-Okrilla (DE); GELFOND, Leonid, 01127 Dresden (DE); EISERT, Stefan, 02689 Wehrsdorf (DE)
(86) Internationale Anmeldenummer: PCT/EP2012/003913
(87) Internationale Veröffentlichungsnummer: WO 2013/060403

(56) Entgegenhaltungen:
- DE-A1- 19 534 232
- DE-A1-102008 033 122
- US-A- 3 604 641

## Beschreibung

Die Erfindung betrifft ein Verfahren und eine Vorrichtung zum materialselektiven Zerlegen eines Recyclinggutes in wiederverwertbare Materialien mittels des elektrohydraulischen Effektes.

Aus der DE 10 2006 027 273 B3 und aus der DE 10 2008 033 122 A1 ist es bekannt, den sogenannten elektrohydraulischen Effekt (Zerkleinerungseffekt) heranzuziehen, um ein Beschickungsgut in einer wassergefüllten Zerkleinerungskammer mit Hilfe elektrischer Durchschläge zu einem Mahlgut (elektrohydraulisch) zu zerkleinern. Konkret ist dort die Gewinnung von Reinstsilizium aus metallurgischem Silizium mittels des elektrohydraulischen Zerkleinerungseffektes beschrieben.

Aus der DE 10 2009 034 314 B4 ist ein Verfahren zur materialselektiven Zerlegung eines Brennstoffzellenstacks zum Zwecke des Recyclings mit Hilfe des elektrohydraulischen Effekts bekannt, bei dem in einem ersten Schritt mittels eines Elektrodensystems gezielt seitlich auf die Klebeflächen von Bipolarplatten des Brennstoffzellenstacks treffende Schall- bzw. Schockwellen erzeugt werden mit der Folge, dass die Integrität der Verklebung zerstört und demzufolge die Hauptkomponenten des Brennstoffzellenstacks in Form dessen Bipolarplatten separiert werden. In einem weiteren Schritt erfolgt eine Oberflächenreinigung der einzelnen Bipolarplatten.

Dieses zweistufige Zerlegungs- und Reinigungsverfahren ist speziell auf die materialselektive Zerlegung von Brennstoffzellenstacks ausgerichtet und zur Zerlegung anderer Recyclinggüter weder vorgesehen noch geeignet, zumal die eingebrachte Impulsenergie mit maximal 10J sehr klein und die Arbeits- oder Widerholfrequenz der erzeugten Hochspannungsimpulse mit etwa 100Hz sehr hoch sind.

Aus der DE 195 34 232 A1 ist ein Verfahren zur Zerkleinerung und Zertrümmerung von aus nicht metallischen oder teilweise metallischen Bestandteilen konglomerierten Festkörpern und zur Zerlegung homogener nicht metallischer Festkörper durch möglichst schnelle Entladung eines elektrischen Energiespeichers bekannt, das auch zur Auftrennung von Metall-Kunststoffverbindungen oder Kunststoff-Keramikverbindungen oder eines Verbundes aus Metall, Keramik und Kunststoff verwendbar sein soll. Dieses bekannte Verfahren zielt darauf ab, durch Dimensionierung eines LC-Entladekreises sicherzustellen, dass der Spannungsanstieg bis zur Durchbruchspannung unterhalb einer Verzugszeit von 200ns erfolgt und die elektrischen Durchschläge im Wesentlichen im zu zerlegenden Festkörper, nämlich im Mahlgut, erzeugt werden.

Der Erfindung liegt die Aufgabe zugrunde, ein besonders geeignetes Verfahren zum Zerlegen eines aus mehreren Werkstücken oder Bestandteilen zusammengesetzten Recyclinggutes in wiederverwertbare Materialien anzugeben. Des Weiteren soll ein hierzu geeignete Vorrichtung angegeben werden. Insbesondere soll eine möglichst große Anzahl unterschiedlicher Gegenstände, Bauteile bzw. Güter möglichst vollständig in einfacher sowie kostensparender Art und Weise selektiert werden können.

Bezüglich des Verfahrens wird diese Aufgabe erfindungsgemäß gelöst durch die Merkmale des Anspruchs 1. Vorteilhafte Weiterbildungen und Varianten sind Gegenstand der hierauf rückbezogenen Unteransprüche.

Hierzu wird mittels einer Impulsstromquelle innerhalb einer Unterwasserfunkenstrecke eine Stoßentladung mit einer mittleren Feldstärke kleiner oder gleich 5kV/mm und einer Impuls- bzw. Entladungsenergie größer 10J, vorzugsweise zwischen 300J und 1200J oder einer Impuls- oder Entladungsenergie zwischen 200J und 1500J mittels jeder Elektrode (5), eines aus mehreren Elektroden (5) bestehenden Elektrodensystems, zumindest im Wesentlichen in der Flüssigkeit erzeugt. Dabei wird das Recyclinggut derart im Behälter positioniert, dass es behälterbodenseitig aufliegt und die Unterwasserfunkenstrecke zumindest teilweise ausfüllt. Vorzugsweise wird bei dem erfindungsgemäßen Verfahren eine Impulsdauer größer 1 µs bei einer Impulsanstiegszeit des oder jedes Hochspannungsimpulses größer 500ns eingestellt, so dass sich im Behälter die Entladungskanäle im Wesentlichen in der Flüssigkeit ausbilden.

Der Erfindung geht von der Überlegung aus, dass die Ausbildung elektrischer Durchschläge im zu zerlegenden Festkörper (Mahlgut) von den physikalischen Eigenschaften, insbesondere von der Durchschlagsfestigkeit, der beteiligten Stoffe abhängt, und dass die Flüssigkeit, in welche der zu zerlegende Festkörper eingebracht wird, sowie der Festkörper selbst einen unterschiedliches zeitliches Verhalten der Durchschlagsfestigkeit aufweisen. Für kurzzeitig anliegende Spannungen weisen Flüssigkeiten, wie z. B. Wasser, eine deutlich höhere Durchschlagsfestigkeit als Festkörper (Mahlgut) auf.

Liegt demnach eine Spannung für längere Zeitintervalle an, so sinkt die Kurve der Durchschlagsspannung des Wassers unter diejenige des Festkörpers bzw. Mahlguts. Dies bedeutet, dass für eine gezielte Generierung von Durchschlägen im Festkörper besonders steilflankige Spannungsimpulse notwendig sind, um zu erreichen, dass die Flüssigkeit eine vergleichsweise große Durchschlagsfestigkeit aufweist. Um derart hohe Spannungsanstiegsgeschwindigkeiten zu erzielen wird eine hinreichend große Triebkraft in Form einer angelegten Hochspannung von 300kV bis 600kV benötigt. Durch eine Mehrzahl von Kondensatoren, die in einer Kondensatorbank parallel verschaltet sind, kann zwar eine entsprechend hohe Spannung generiert werden, wobei im Entladungsfall die Kondensatoren in Reihe geschalten werden (Marx-Generator). Allerdings ist eine solche Kondensatorbank sehr aufwendig.

Auch zeichnet sich das aus der eingangs genannten DE 195 34 232 A1 bekannte Verfahren durch derart hohe Impulsspannung von 300kV bis 600kV und eine vergleichsweise geringe Energie pro Einzelimpuls sowie die gezielte Erzeugung des elektrischen Durchschlags im Festkörper (Mahlgut) aus. Zuletzt genannter Sachverhalt bewirkt die Ausbildung der Schockwelle im zu zerkleinernden Mahlgutkörper. An dessen Entstehungsort treten sehr hohe Druckgradienten auf, was zu einer lokalen Konzentration von Kompressionsbrüchen in unmittelbarer Nähe des Ursprungs der Schockwelle führen kann. Bei kugelförmiger Ausbreitung dieser Druckwelle im Mahlgut kommt es weiterhin zu Transmissions- und Reflektionseffekten an Übergängen benachbarter Materialien. Diese Effekte der Stoßwellenphysik führen zu einer signifikanten Erhöhung der Druckgradienten an den Materialgrenzflächen und damit zu mechanischen Brüchen bevorzugt an diesen Stellen.

Die Erfindung liegt nun die Erkenntnis zugrunde, dass ein Recyclinggut zuverlässig materialselektiv zerlegt werden kann, wenn innerhalb einer vorgegebenen, relativ niedrigen Wiederholfrequenz eine Anzahl von Hochspannungsimpulsen mit einer solchen Impulsanstiegszeit erzeugt werden, bei der die Durchbruchspannung des flüssigen Mediums zeitlich weitgehend vor derjenigen eines zu selektierenden, dielektrischen Materialien erreicht ist.

Gerade bei derartigen Impulsanstiegszeiten, bei denen die Durchbruchspannung des flüssigen Mediums zeitlich vor derjenigen der zu selektierenden Materialien erreicht ist, kann eine Vielzahl unterschiedlicher Recyclinggüter mit vergleichsweise geringem Aufwand und insbesondere vergleichsweise geringerer Hochspannung von weniger als 100kV materialselektiv in deren verwertbaren Bestandteile oder Werkstücke zerlegt werden.

Diese Erkenntnis ist auf die physikalische Überlegung zurückzuführen, dass bei der Generierung von Schock- oder Leistungsschallwellen im flüssigen Medium ein großflächiger Welleneintrag in ein Material bzw. in dessen immersiertes oder immergiertes, d. h. in ein flüssiges Medium eingelegtes bzw. untergetauchtes Mahlgut erfolgt, wodurch sich unterschiedliche Selektionseffekte oder -prozesse und demzufolge materialselektive Aufschlüsse der in dem jeweiligen Recyclinggut enthaltenen Werkstücken realisieren lassen. Die auftretenden Prozesse lassen sich in die nachfolgend beschriebenen physikalischen Vorgänge einteilen.

Durch den homogenen, isotropen Energieeintrag aus dem flüssigen Medium erfährt das immergierte Gut einen ebenso homogenen Krafteintrag. Das Zerkleinerungsverfahren weißt dadurch eine hohe Bruchselektivität hinsichtlich mechanischer Festigkeitsunterschiede im Material auf. Im Gegensatz zu allen klassischen Zerkleinerungsvarianten entfällt der Vorzugsbruch an der Krafteintragsstelle, die bei allen anderen Verfahren lokal konzentriert vorhanden ist.

Im Anschluss an den Eintritt der Schock- bzw. Leistungsschallwelle in das Gut propagiert die Welle durch den Festkörper und erfährt an jeder im Propagationsweg befindlichen Materialinhomogenität, welche auch eine Inhomogenität der akustischen Impedanz darstellt, eine Reflektion, deren Intensität oder Stärke vom Verhältnis der akustischen Impedanzen der beiden grenzflächigen Materialien abhängt.

Bei einer Reflektion am festen Ende findet an einem derartigen Übergang eine Reflektion mit einer Phaseninvasion statt, die eine Zugspannung zwischen den beiden Medien bewirkt. In Folge dieses auch als Hopkins-Effekt bezeichneten physikalischen Phänomens wird die Bruchbildung zusätzlich verstärkt. In Folge dessen bricht das jeweilige Material gezielt an den mechanisch instabilen Stellen.

Durch die partielle Leitfähigkeit der zu recycelnden Kompositmaterialien erfolgt eine gezielte Stromführung entlang leitfähiger Bereiche, welche einen entsprechend höheren Energieeintrag erfahren. Bei entsprechend kleinem Querschnitt kommt es auch hier zu einer explosionsartigen, thermischen Energieumsetzung, wodurch ebenfalls eine Schockwelle erzeugt wird. In physikalischen Experimenten ist dieser Teileffekt unter dem Begriff "Drahtexplosion" bekannt. Besonders hohe Energieeinträge entstehen in diesem Zusammenhang am Übergang zwischen leitfähigen Bereichen des Gutes und der Flüssigkeit (sog. "Fußpunkte") oder des restlichen, dielektrischen Festkörpers.

Eine Besonderheit des elektrohydraulischen Effekts beim Recyceln von Kompositmaterialien besteht daher erkanntermaßen darin, dass die vorgenannten Effekte kombiniert auftreten und somit abhängig vom Elementgemisch eine hohe Selektivität der Auftrennung erreicht werden kann.

Bezüglich der Vorrichtung wird die genannte Aufgabe erfindungsgemäß gelöst durch die Merkmale des Anspruchs 5. Vorteilhafte Ausgestaltungen und Varianten sind Gegenstand der hierauf rückbezogenen Unteransprüche.

Die Vorrichtung umfasst einen mit einer Flüssigkeit befüllbaren Behälter zur Aufnahme des Recyclinggut sowie Mitteln zur Erzeugung elektrischer Stoßentladungen in der Flüssigkeit. Ein mit einer Hochspannung aufschlagbares Elektrodensystem mit mindestens einer Elektrode und einer Gegenelektrode ist dazu vorgesehen und eingerichtet, innerhalb einer vorgebbaren Wiederholfrequenz eine Anzahl von Hochspannungsimpulsen zu erzeugen derart, dass innerhalb einer Unterwasserfunkenstrecke zwischen einer behälterbodenseitigen Elektrode und einer Anzahl von gegen diese zeigenden behälterdeckelseitigen Elektroden eine Stoßentladung mit einer mittleren Hochspannung oder Feldstärke kleiner oder gleich 5kV/mm und einer Impuls- bzw. Entladungsenergie zwischen 300J und 1200J generiert ist, wobei die Anstiegszeit der Hochspannungsimpulse größer als 500ns, insbesondere größer 1µs ist. Im Sinne einer effizienten Schockwellenerzeugung sollte die Impulsdauer ebenfalls kleiner als 30µs sein.

Das erfindungsgemäße Verfahren und die erfindungsgemäße Vorrichtung eignen sich beispielsweise zum Recycling von Akkumulatoren, insbesondere Lithium-Ionen-Akkumulatoren. Hierzu wird der Akkumulator in den mit dem flüssigen Medium - vorzugsweise mit Öl - gefüllten, nachfolgend auch als Recyclingreaktor bezeichneten Behälter eingebracht. Anschließend erfolgt die Positionierung der Hochspannungselektrode, vorzugsweise direkt über dem Recyclinggut, bevor mittels der jeweiligen Hochspannungselektrode geeigneterweise mittels eines Impulsgenerator elektrische Impulse erzeugt werden. Die durch das zweckmäßigerweise aus mehreren Elektroden bestehende Elektrodensystem erzeugten Schall- bzw. Schockwellen treffen auf den Akkumulator und zerstören dessen üblicherweise aus Kunststoff bestehenden Außenmantel.

Die Weiterbehandlung mittels des elektrohydraulischen Effekts nach dem erfindungsgemäßen Verfahren bewirkt das Aufreißen des Metallgehäuses des Akkumulators und die Zerlegung der inneren Bestandteile, wie beispielsweise der Elektroden des Akkumulators. Wird dabei bevorzugt an Stelle von Wasser ein Öl als flüssiges Medium verwendet, so wird aufgrund dieser wasserfreien Arbeitsweise der Kontakt des Elektrolyten des Akkumulators mit Wasser vermieden und somit eine zu einem Brand oder zu einer Explosion führende Reaktion zuverlässig unterbunden.

Im Anschluss an die Zerlegung des Akkumulators können die einzelnen Bestandteile aus dem flüssigen Medium entfernt werden, beispielsweise durch Siebung oder Hydrozyklonisierung. Die in Folge der Zerlegung bzw. dem Aufschluss in der Mahlflüssigkeit enthaltenen Stoffe können chemisch abgeschieden werden.

Auch ist es möglich, einen zweistufigen Zerlegungsprozess durchzuführen. Hierbei erfolgt in einer ersten Stufe das Abtrennen des Kunststoffmantels des Akkumulators und das Öffnen dessen Metallgehäuses inklusive Passivierung des Elektrolyten im wasserfreien Medium. In einem zweiten Schritt kann die materialselektive Trennung des Gehäuses und der Elektroden des Akkumulators erfolgen.

Für die Auftrennung von Akkumulatoren in verschiedenen flüssigen Medien kann der Reaktorbehälter auch konisch ausgeführt sein. Bevorzugt ist jedoch ein zylindrischer Reaktorbehälter. Die Behälter- bzw. Reaktorgröße sollte derart bemessen sein, dass ein Volumen von kleiner oder gleich 3001, vorzugsweise zwischen 2I und 201, bereit gestellt ist. Die Hochspannung sollte hierbei zwischen 20kV und 100kV, vorzugsweise im Bereich zwischen 30kV und 50kV, betragen. Die an der jeweiligen Elektrode des Elektrodensystems bereitgestellte Energie sollte zwischen 100J und 5000J, insbesondere zwischen 300J und 500J, betragen.

Bevorzugt weist das Elektrodensystem mehr als eine und weniger als zehn Elektroden, insbesondere bis zu drei Elektroden, auf. Die Wiederholfrequenz der insbesondere von einem Impulsgenerator bereitgestellten Hochspannungsimpulse ist kleiner oder gleich 10Hz. Als flüssige Medien kommen, insbesondere Öl, jedoch auch Leitungswasser oder destilliertes Wasser, zweckmäßigerweise inklusive chemischer Zuschläge, in Frage.

Bei Verwendung von Öl als flüssiges Medium ist sichergestellt, dass sich Gefahrenstoffe im Öl befinden und insbesondere eine Passivierung des Fluors sichergestellt ist, so dass keine Flusssäure entsteht und eine Wasserstoffbildung in Folge einer Reaktion von Lithium und Wasser vermieden ist.

In einem konkreten Ausführungsbeispiel wird anfangs ein vollständig entladener Lithium-Ionen-Akkumulator - möglichst flachliegend - in den Reaktorbehälter eingebracht, der mit Öl, beispielsweise mit Pflanzenöl, befüllt ist. Anschließend wird der Reaktorbehälter mit einem Behälterdeckel, in den geeigneterweise das Elektrodensystem integriert ist, verschlossen. Das Elektrodensystem besteht hierbei vorzugsweise aus mehreren, geeigneterweise kreisförmig angeordneten Hochspannungselektroden. Ein derartiges Mehrelektrodensystem ermöglicht eine flächenmäßige Behandlung über den gesamten Reaktorquerschnitt. Um während der Behandlung einen Druckaufbau im Behälter zu vermeiden, ist im Behälterdeckel ein Entlüftungsstutzen vorgesehen.

Im nächsten Schritt wird der Elektrodenabstand, d. h. der Abstand zwischen der jeweiligen Hochspannungselektroden und der Oberseite des Akkumulators eingestellt. Hierbei wird zweckmäßigerweise das Elektrodensystem direkt auf den Akkumulator aufgesetzt.

Im folgenden Schritt werden an jedem Elektrodenpaar (d. h. eine der Elektroden des Elektrodensystems und die vorzugsweise allen Elektroden gemeinsame Gegenelektrode am Behälterboden) Impulsentladungen mit einer Wiederholfrequenz von etwa 5Hz bis 10Hz vom Impulsgenerator mit einer Energie von jeweils etwa 600J bei einer Spannungshöhe von 40kV erzeugt. Die Erhöhung der Wiederholfrequenz ermöglicht eine Verkürzung der erforderlichen Behandlungsdauer.

Eine zeitlich nach dem ersten Durchschlag zwischen den Hochspannungselektroden und dem metallischen Gehäuse des Akkumulators entstehende Druckwelle breitet sich im Öl aus, was zur Zerkleinerung des Akkumulators führt. Die Bearbeitungszeit zur Zerlegung des Akkumulators variiert dabei in Abhängigkeit von der Wiederholfrequenz, von der Anzahl und vom Aufbau sowie von der Größe der eingebrachten Akkumulatoren und beträgt beispielsweise zwischen 40s und 200s.

Im Anschluss an die erfindungsgemäße Behandlung liegen die einzelnen Fraktionen im flüssigen Medium (Mahlwasser) vor und können auf mechanische und/oder chemische Weise abgeschieden werden.

Das erfindungsgemäße Verfahren ermöglicht auch das Recycling von beschichteten Metallfolien. Dieses Verfahren erfolgt in einem vorzugsweise aus Stahl bestehenden Reaktorbehälter. Die beschichteten Folien werden zusammen mit dem flüssigen Medium, vorzugsweise Leitungswasser, in den Reaktorbehälter eingebracht. Anschließend wird der Reaktorbehälter mit dessen Reaktordeckel, in den wiederrum das Elektrodensystem integriert ist, verschlossen. Auch in diesem Fall besteht das Elektrodensystem vorzugsweise aus mehreren, kreisförmig angeordneten Hochspannungselektroden mit dem Ziel, eine möglichst großflächige Behandlung über den gesamten Reaktorquerschnitt zu realisieren. Auch ist wiederrum der Reaktordeckel mit einem Entlüftungsstutzen versehen, um einen Druckaufbau innerhalb des Reaktorbehälters in Folge der Behandlung zu vermeiden.

Ebenfalls wird anschließend der Elektrodenabstand zwischen der Hochspannungselektrode und der Gegenelektrode eingestellt, die als Erdelektrode ausgeführt und am Behälterboden vorgesehen bzw. durch diesen gebildet ist. An bzw. mit jedem Elektrodenpaar werden wiederrum Impulsentladungen mit einer Wiederholfrequenz von etwa 3Hz bis 8Hz und einer Impulsenergie zwischen 100J und 5000J, insbesondere 300J und 1500J, pro Elektrode sowie einer Hochspannung von 20kV bis 100kV, insbesondere 30kV bis 50kV, mittels des Impulsgenerators generiert. Eine Erhöhung der Wiederholfrequenz ermöglicht wiederrum die Verringerung der notwendigen Behandlungsdauer.

Die im Anschluss an den elektrischen Durchschlag zwischen den Hochspannungselektroden und der Metallfolie entstehende Druckwelle breitet sich im Wasser aus und führt zur Zerkleinerung und zum Ablösen der Beschichtung. Die benötigte Bearbeitungszeit variiert wiederrum in Abhängigkeit von der Wiederholfrequenz sowie der Füllmenge der eingebrachten beschichteten Folie und beträgt beispielsweise zwischen 1 Minute und 15 Minuten.

Im Anschluss an die Behandlung kann eine Separierung der Folie und der Beschichtung anhand der Größe des Mahlgutes, beispielsweise durch Siebung, erfolgen. Die Beschichtung sedimentiert im Mahlwasser des Reaktorbehälters als feinste Fraktion (Schlamm) und kann anschließend mechanisch oder chemisch abgeschieden werden.

Das erfindungsgemäße Verfahren und die erfindungsgemäße Vorrichtung ermöglichen in vorteilhafter Art und Weise auch die Zerlegung von Elektroschrott mittels des beschriebenen elektrohydraulischen Effekts. Als Recyclinggut können Schalter, insbesondere Schutzschalter, Schütze, keramische Bauteile, wie beispielsweise Sicherungen oder Zündkerzen, Computerbestandteile, Kondensatoren und der Gleichen sowie Stecker oder Steckverbindungen, insbesondere auch in deren wiederverwertbare Bestandteile zerlegt werden.

Die Form des Reaktorbehälters kann wiederrum konisch sein. Vorzugsweise wird jedoch ein zylinderförmiger Reaktorbehälter eingesetzt, dessen Volumen wiederrum kleiner oder gleich 300I, insbesondere kleiner oder gleich 40I ist. Die Hochspannung beträgt wiederrum vorzugsweise weniger als 100kV und insbesondere 30kV bis 50kV. Die Energie je Hochspannungselektrode beträgt auch bei diesem Recyclingverfahren weniger als 5000J und insbesondere weniger als 1500J, vorzugsweise jedoch mehr als 200J pro Elektrode. Auch wird wiederrum ein Elektrodensystem mit mehreren, geeigneterweise kreisförmig angeordneten Elektroden, beispielsweise bis zu zehn Elektroden, eingesetzt. Als flüssiges Medium eignet sich Leitungswasser oder destilliertes Wasser, gegebenenfalls inklusive Zuschlagsstoffen.

Die Fraktionierung und damit das Selektieren der Materialien der in dem Elektroschrott enthaltenen, wiederverwertbaren Werkstücke erfolgt aufgrund deren unterschiedlicher Bruchcharakteristiken in den Kunststoff-Keramik- und Metall-Bestandteilen bzw. -Partikeln.

Das erfindungsgemäße Verfahren und die erfindungsgemäße Vorrichtung eignen sich insbesondere auch zum Recycling von (elektrischen oder elektronischen) Leiterplatten (Platinen) in flüssigen Medien mit oder ohne Zuschlägen. Die Beschickung des Reaktorbehälters erfolgt mit zerkleinerten oder auch in kompakter Form beibehaltenen Leiterplatten, je nachdem, ob die Leiterplatten selbst zerstört werden sollen oder nicht. Die Reaktorform kann wiederrum konisch sein, ist jedoch vorzugsweise zylindrisch.

Das Reaktorvolumen sollte ebenfalls 300I unterschreiten und kann wiederum insbesondere 40I betragen. Die Hochspannung sollte zwischen 20kV und 100kV, insbesondere zwischen 30kV und 50kV betragen. Die elektrodenspezifische Energie sollte wiederrum kleiner 5000J sein und vorzugsweise zwischen 200J und 1200J betragen, wobei wiederrum eine einzelne Elektrode, vorzugsweise jedoch mehrere Elektroden vorteilhaft sind, die wiederrum geeigneterweise kreisförmig angeordnet sind. Die maximale Elektrodenzahl sollte ebenfalls zehn Elektroden nicht überschreiten. Auch sollte die Wiederholfrequenz kleiner oder gleich 10Hz sein.

Eine zur Durchführung des Verfahrens besonders geeignete Vorrichtung umfasst ein stationäres Traggestell für den Behälterdeckel sowie ein mobiles Traggestell für den deckellosen Behälter oder Behälterkorpus inklusive Behälterboden mit integrierter Gegenelektrode. Der Behälterkorpus ist vorzugsweise zylinderförmig, was die Bereitstellung eines einfachen und kostensparenden Recyclingreaktors ermöglicht. Erkanntermaßen kann ein isolationsfreies Stahl- oder Edelstahlrohr als Behälterkorpus mit bodenseitig angebrachtem Flansch eingesetzt werden. Ein an diesen zudem deckelseitig angebrachter Flansch ermöglicht - wiederrum besonders kostensparend - die Anbringung des vorzugsweise kalottenförmigen Behälterbodens inklusive der Gegenelektrode einerseits und des separierten, aufsetzbaren Behälterdeckels andererseits mittels beispielsweise dichtender Flanschverschraubungen.

Geeigneterweise ist das stationäre Reaktorgestell tragseitig mit einer Traverse versehen, die den Behälterdeckel inklusive des Elektrodensystems definiert hält. Im gekoppelten Zustand wird der Behälterkorpus am Behälterdeckel fixiert. Der Behälterkorpus kann dabei in dem mobilen Gestell bzw. in dessen Traverse auch schwenkbar angeordnet sein, insbesondere zu dessen vereinfachter Befüllung oder Entleerung.

Die Recyclingvorrichtung umfasst zudem geeigneterweise ein schrankartiges Gehäuse, insbesondere auch zur Bereitstellung einer Schallschutzkabine, mit vorzugsweise zwei Gehäusekammern. Eine untere Gehäusekammer nimmt das mobile Traggestell mit dem Behälterkorpus auf, während das stationäre Gestell im Reaktorgehäuse positioniert ist. Dabei nimmt eine oberhalb der unteren Gehäusekammer befindliche weitere Gehäusekammer die elektrotechnischen Komponenten, insbesondere den einzelnen Hochspannungskondensator oder eine geringe Anzahl von Hochspannungskondensatoren und die Anschlussleitungen zu dem Elektrodensystem, auf.

Diese Recyclingvorrichtung ist zudem dazu eingerichtet, den Behälterdeckel auf den mittels des mobilen Traggestells in das Reaktorgehäuse bzw. in den Reaktorschrank eingeschobenen Reaktorkorpus vertikal verstellbar aufzusetzen, während hierbei die Hochspannungsanschlüsse und weitere Hochvoltkomponenten und/- oder gegebenenfalls weitere elektrotechnischen Komponenten in der oberen Gehäusekammer einliegen. Hierdurch ist erreicht, dass beim Aufsetzen und Befestigen des Behälterdeckels auf bzw. am Behälterkorpus die notwendigen Handhabungen nicht nachteilig beeinträchtigt werden und Hochspannung führende Teile vom unteren Gestell- bzw. Behälterbereich separiert sind.

Eine oder vorzugsweise zwei Gehäusetüren ermöglichen zum Zwecke des Schallschutzes und der Sicherstellung der elektromagnetischen Verträglichkeit (EMV) sowie zur berührungssicheren Handhabung des Reaktorbehälters bzw. dessen Korpus ein selektives Verschließen der oberen und unteren Gehäusekammer des Reaktorgehäuses.

Ein vorzugsweise räumlich unmittelbar neben dem Reaktorgehäuse, geeigneterweise seitlich, positionierter Steuerungsschaltschrank für die Komponenten zur Anlagensteuerung mit einem wiederrum vorzugsweise säulenartigen Panelgehäuse inklusive Bedienpanel und Anzeigeeinrichtung (Display) dient zum Bedienen, Schalten und Steuern der Recyclingvorrichtung.

Nachfolgend werden Ausführungsbeispiele der Erfindung anhand einer Zeichnung erläutert. Darin zeigen:
- Fig. 1: in einem vereinfachten Schaltbild eine Vorrichtung zum materialselektiven Zerlegen eines Recyclinggutes mit einem Reaktorbehälter zur Aufnahme eines Recyclinggut mit deckelseitigen Elektroden,
- Fig. 2: in einer perspektivischen Vorderansicht einen Reaktorbehälter in einem teilweise mobilen Reaktorgestell innerhalb eines Reaktorgehäuses mit zwei Gehäusekammern, und
- Fig. 3: das Reaktorgehäuse und das mobile Traggestell mit dem Reaktorbehälter in einer Vorderansicht.

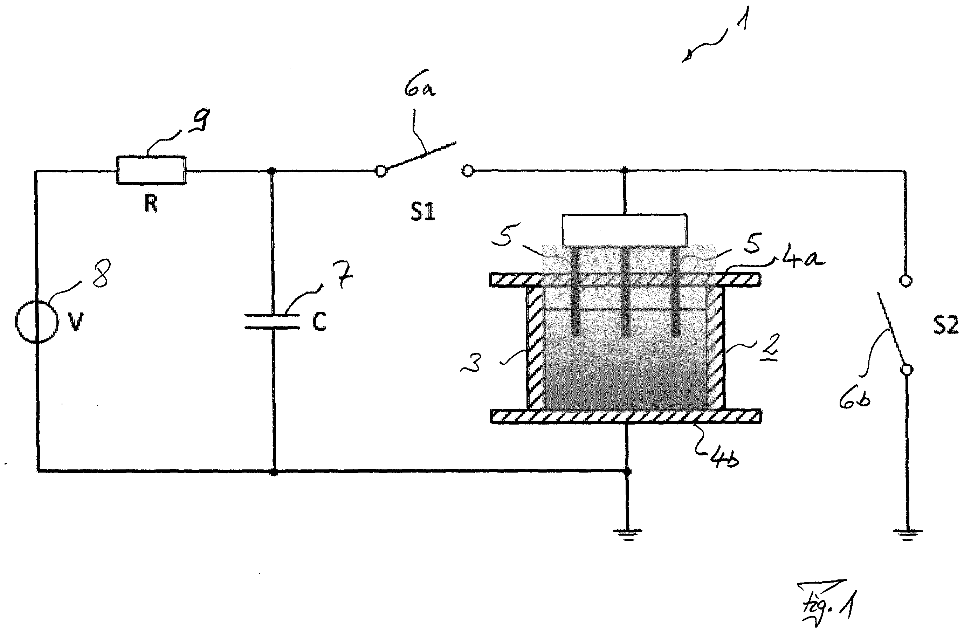

Fig. 1 zeigt schematisch zumindest die Hauptkomponenten einer Vorrichtung 1 zum materialselektiven Zerlegen eines Recyclinggutes in wieder verwertbare Materialen mit einem mit einer Flüssigkeit F befüllten Behälter 2 zur Aufnahme des Recyclinggut. Der dargestellte Behälter 2 weist in einer besonders einfachen Ausführung einen zylinderförmigen Behälterkorpus 3, beispielsweise aus Edelstahl, mit einem deckelseitigen (oberen) Flansch und einem bodenseitigen (unteren) Flansch sowie einen Behälterdeckel 4a und einen Behälterboden 4b auf. In den Behälterdeckel 4a sind vorliegend drei stabförmige Elektroden 5, vorzugsweise zueinander äquidistant, eingesetzt oder integriert. Die Elektroden 5 verlaufen vertikal, d. h. im Wesentlichen parallel zur zylinderförmigen Wandung des Behälterkorpus 3. Der Behälterdeckel 4a und der Behälterboden 4b sind mit den entsprechenden Flanschen des Behälterkorpus 3 mittels einer Vielzahl von umfangseitig gleich verteilten Verschraubungen dichtend und lösbar verbunden.

Der Behälterboden 4b bildet die Gegenelektrode oder enthält diese und kann in nicht näher dargestellter Art und Weise gegen Erdpotential geführt werden. Die Anordnung der Elektroden 5 des durch diese gebildeten Elektrodensystems sind über den Behälterdeckel 4a und damit über die Behälterfläche möglichst gleich verteilt angeordnet. Es können auch bspw. bis zu zehn Elektroden 5 über die Behälterfläche gleichmäßig verteilt angeordnet sein. Der Behälterkorpus 3 ist vorzugsweise ohne innere Wandisolierung ausgeführt. Eine solche ist zur Durchführung des erfindungsgemäßen Verfahrens nicht erforderlich.

Die Elektroden 5 sind über einen Hochspannungsschalter 6a (S1) und einen gegen Masse oder Erdpotential (Ground) geführten Sicherheitstrennschalter 6b (S2) an einen Kondensator 7 (C) angeschlossen. Dabei ist geeigneterweise für jede der Elektroden 5 jeweils ein Sicherheitstrennschalter 6b und jeweils ein Kondensator 7 vorgesehen. Der oder jeder Kondensator 7 wird mittels eines Ladegeräts 8 (V), insbesondere über einen ohmschen Widerstand 9 (R), aufgeladen.

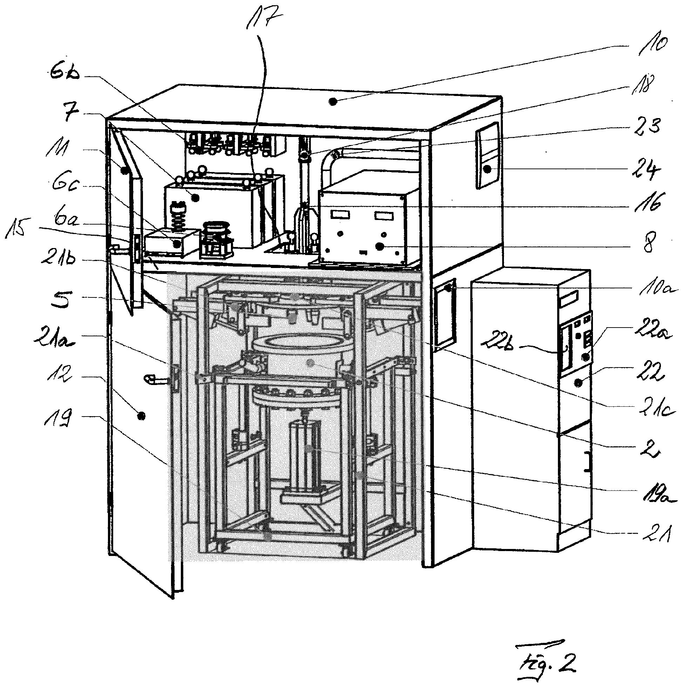

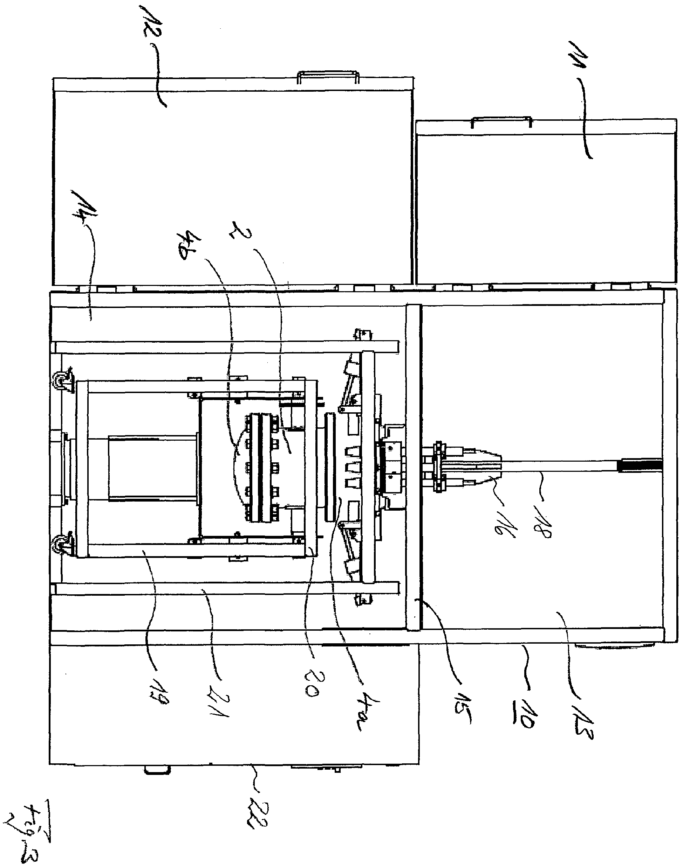

Die Fig. 2 und 3 zeigen die als Recyclingreaktor ausgeführte Vorrichtung 1 mit einem Reaktorgehäuse 10 mit daran einseitig angelenkten Türen 11 und 12. Das Reaktorgehäuse 10 weist zwei Kammern 13 und 14 auf, die mittels eines teilweise durchbrochenen Zwischenbodens 15 unterteilt bzw. voneinander getrennt sind. Die obere Kammer 13 dient als Komponentenraum zur Aufnahme elektrischer Komponenten sowie beispielsweise eines Lüfters. Eine Verstelleinheit 16 zur Kontaktierung der in der unteren, als Arbeitsraum dienenden Kammer 14 angeordneten Elektroden 5 führt einerseits über einen Durchbruch 17 (Durchgangsöffnung) im Zwischenboden 15 des Gehäuses 10 in den Arbeitsraum 14 und ist andererseits im Komponentenraum 13 an einen Verstellzylinder 18 zur Elektrodenverstellung angebunden.

Der Reaktorkorpus 2 mit einem in dieser Ausführungsform kalottenartigen Behälterboden 4b, der wiederum die Gegenelektrode bildet, ist in einem mobilen Traggestell 19 an einer oberen Traverse 20 (Fig. 3) gehalten. Den Behälterdeckel 4a trägt ein stationäres Traggestell 21, unter welches das mobile Traggestell 19 verfahrbar ist. Eine Führungsschiene 21 a dient zur Positionierung des mobilen Trag- oder Reaktorgestell 19 am bzw. in Bezug zum stationären Traggestell 21. Ein geeigneterweise zentral im mobilen Traggestell 19 vorgesehener Hubzylinder 19a dient zum Heben des Reaktorkorpuses 2 in Richtung des und an den Behälterdeckel 4a, während ein Spannsystem 21 b zur Befestigung des Reaktorkorpuses 2 am Behälterdeckel 4a dient. Zur Elektrodenfixierung der Elektroden 5 dient eine Halterung 21c am stationären Traggestell 21.

Im Montagezustand ist in dieser Konstellation der Behälterdeckel 4a mit dem Behälterkorpus 3 verschraubt. Ein außerhalb des Reaktorgehäuses 10 angeordneter, turmartiger Steuerungsschaltschrank 22 mit einem Bedienpanel 22a und Anzeigeeinrichtung (Display) 22b ermöglicht die Inbetriebnahme und Steuerung des Reaktorbehälters 1 zum Zwecke des Zerlegens unterschiedlichen Recyclinggutes. Im Bereich der als Arbeitsraum dienenden unteren Kammer 14 ist im Reaktorgehäuse 10 ein Sichtfenster 10a für eine Sichtprüfung vorgesehen

Wie lediglich in Fig. 2 veranschaulicht, sind die sicherheitsrelevanten Komponenten, nämlich die Verstelleinheit 16 zur Kontaktierung der Elektroden 5, der Verstellzylinder 18 zur Elektrodenverstellung, der Hochspannungsschalter 6a und dessen Zündblock 6c, der Sicherheitstrennschalter 6b, der oder jeder Kondensator 7 und das Ladegerät 8 in der oberen Kammer 13 des Reaktorgehäuses 10 angeordnet, während die zur manuellen Handhabung dienenden Komponenten, insbesondere die Traggestelle 19 und 21 sowie der Reaktorbehälter 1 inklusive Behälterkorpus 3, Behälterdeckel 4a und Behälterboden 4b in der untern Kammer 14 des Reaktorgehäuses 10 angeordnet sind. In der oberen Kammer 13 des Reaktorbehälters 1 befindet sich zudem ein in die untere Kammer 14 führendes Lüfterrohr 23 eines mit dem Außenraum in Verbindung stehenden Lüfters 24.

Zum Befüllen bzw. Beschicken des Reaktorbehälters 1 mit einem flüssigen Medium, vorzugsweise Wasser, sowie dem zu zerlegenden Recyclinggut, ist der Behälterkorpus 2 bei abgenommenen und vom stationären Gestell 21 getragenen Behälterdeckel 4b mittels des mobilen Gestells 19 aus dem unteren Arbeitsraum 15 heraus verfahrbar. Der mit dem flüssigen Medium befüllte Reaktorkorpus 2, in den das zu zerlegende Recyclinggut eingebracht ist, wird anschließend in den Arbeitsraum 15 verfahren und dort unterhalb des stationären Gestells 19 derart positioniert, dass der Gehälterdeckel 5 auf den Gehälterkorpus 2 aufgesetzt und mit diesem verschraubt werden kann. Anschließend kann der Arbeitsraum 15 bereits mittels der Gehäusetür 13 verschlossen werden, während weitere Anschluss- und Vorbereitungsmaßnahmen in der oberen Gehäusekammer 14 weiterhin vorgenommen werden können. Anschließend wird auch die obere Gehäusekammer 14 mittels der Gehäusetür 12 verschlossen. Hierdurch werden ein Schallschutz und insbesondere ein ausreichender EMV-Schutz sichergestellt.

Mittels des Bedienpanels 22 kann nunmehr unter Gewährleistung der erforderlichen Sicherheit der Reaktor- bzw. Recyclingbehälter 1 zur Durchführung des erfindungsgemäßen Verfahrens in Betrieb genommen werden. Ein bspw. in das Bedienpanel 22 oder in die obere Gehäusekammer 14 integrierter Impulsgenerator ist an eine entsprechende Energiequelle, insbesondere an ein Starkstromnetz mit etwa 360 V bis 400 V, angeschlossen und wird von dieser versorgt. Hiermit werden - gesteuert und mit einer Wiederholfrequenz von kleiner oder gleich 10 Hz - die Hochspannungsimpulse vorzugsweise mittels lediglich eines einzigen Hochspannungskondensators erzeugt. Die erzeugte Hochspannung ist kleiner oder gleich 100 kV, vorzugsweise etwa 50 kV. Dabei wird eine impulsspezifische Entladungsenergie zwischen 300 J und 1.200 J zur Generierung von Stoßentladungen mit einer mittleren Feldstärke innerhalb einer Unterwasserfunkenstrecke kleiner oder gleich 5 kV/mn im Reaktorbehälter 2 erzeugt.

Das in das flüssige Medium eingebrachte Recyclinggut wird durch die Stoßentladungen materialselektiv zerlegt, wobei innerhalb einer vorgegebenen Wiederholfrequenz eine Anzahl von Hochspannungsimpulsen mit einer solchen Impulsanstiegszeit erzeugt werden, bei dem die Durchbruchspannung des flüssigen Mediums zeitlich weitgehend vor derjenigen der zu selektierenden, dielektrischen Materialien erreicht ist.

Dadurch wird implizit eine Generation der Schockwelle innerhalb des flüssigen Mediums erreicht. Demgegenüber wird bei bekannten Verfahren, beispielsweise gemäß der DE 19 534 232 A1, ausgehend von den technischen Rahmenbedingungen explizit ein Durchschlag durch den Festkörper hervorgerufen.

Wird allerdings entsprechend dem erfindungsgemäß Verfahren eine Schockwelle im flüssigen Medium generiert, so ergibt sich ein abweichender physikalischer Hauptwirkmechanismus. Die Materialzerkleinerung ergibt sich nämlich hauptsächlich aus der Einkopplung der Schockwelle aus dem flüssigen Medium in das Material des Recyclinggutes (Mahlgut). Durch den homogenen, isotropen Energieeintrag aus dem flüssigen Medium erfährt das immergierte Mahlgut einen ebenso homogenen Krafteintrag. Das Zerkleinerungsverfahren weißt dadurch eine hohe Bruchselektivität hinsichtlich mechanischer Festigkeitsunterschiede im Material auf. Im Gegensatz zu anderen Zerkleinerungsvarianten entfällt der Vorzugsbruch an der Krafteintragsstelle, die bei dem bekannten Verfahren lokal konzentriert vorhanden ist.

Das elektrohydraulische Verfahren stellt damit vorteilhafterweise die Möglichkeit dar, durch geringste Festigkeitsunterschiede innerhalb von Kompositmaterialien diese zu trennen. Dies ermöglicht einen qualitativen Fortschritt bei der Auftrennung von Kompositmaterialien. Weiterhin ermöglicht es einen einfacheren apparativen Aufbau, denn der Aufbau komplizierter Marxgeneratoren entfällt. Damit entfällt auch die Problematik, die entstehenden Hochspannungen oberhalb von 100kV zu isolieren. Letzteres bedingt ein qualitativ anderes Vorgehen als bei niedrigeren Spannungen, insbesondere 50 kV, da oberhalb hiervon Coronaentladungen auftreten, welche aufwendig abgeschirmt werden müssen.

Weiterhin kann aufgrund der niedrigeren Spannungen mit einer Luftisolation innerhalb des Generators gearbeitet werden, so dass nicht mehr auf eine Ölisolation wie bei o.g. Marxgenerator zurückgegriffen werden muss. Die dadurch bedingten, niedrigeren Anlagenkosten eliminieren das bisher entscheidende Hemmnis hinsichtlich der Anwendung der Impulstechnik im Recycling, namentlich die hohen Investitionskosten und die dadurch oftmals fehlende Rentabilität der Anwendung. Im Weiteren treten zusätzlich der o.g. Fraktionierung aufgrund mechanischer Instabilitäten noch weitere Selektionseffekte auf. So propagiert nach dem Eintritt der Schock- bzw. Leistungsschallwelle in das jeweilige Material oder die Materiealien des Recyclinggutes, nachfolgend auch als Mahlgut bezeichnet, die Welle durch den Festkörper und erfährt an jeder im Propagationsweg befindlichen Materialinhomogenität, welche auch eine Inhomogenität der akustischen Impedanz darstellt, eine Reflektion, deren Intensität oder Stärke vom Verhältnis der akustischen Impedanzen der beiden grenzflächigen Materialien abhängt. Bei einer Reflektion am festen Ende findet an einem derartigen Übergang eine Reflektion mit einer Phaseninvasion statt, die eine Zugspannung zwischen den beiden Medien bewirkt. In Folge dieses, auch als Hopkins-Effekt bezeichneten physikalischen Phänomens wird die Bruchbildung zusätzlich verstärkt. In Folge dessen bricht das jeweilige Material gezielt an den mechanisch instabilen Stellen.

Durch die partielle Leitfähigkeit der zu recycelnden Kompositmaterialien erfolgt eine gezielte Stromführung entlang leitfähiger Bereiche, welche einen entsprechend höheren Energieeintrag erfahren. Bei entsprechend kleinem Querschnitt kommt es auch hier zu einer explosionsartigen, thermischen Energieumsetzung, wodurch ebenfalls eine Schockwelle erzeugt wird. In physikalischen Experimenten ist dieser Teileffekt unter dem Begriff "Drahtexplosion" bekannt. Besonders hohe Energieeinträge entstehen in diesem Zusammenhang am Übergang zwischen Leitfähigen Bereichen des Mahlgutes und der Flüssigkeit (sog. "Fußpunkte") oder des restlichen, dielektrischen Festkörpers.

Als Besonderheit des elektrohydraulischen Effekts beim Recycling von Kompositmaterialien ist zu sehen, dass die vorgenannten Effekte kombiniert auftreten und daher abhängig vom Elementgemisch eine hohe Selektivität der Auftrennung erreicht werden kann.

### Bezugszeichenliste

- 1: Vorrichtung/Recyclingreaktor
- 2: Behälter
- 3: Behälterkorpus
- 3a: oberer Flansch
- 3b: unterer Flansch
- 4a: Behälterdeckel
- 4b: Behälterboden/Gegenelektrode
- 5: Elektrode
- 6a: Hochspannungsschalter S1
- 6b: Sicherheitstrennschalter S2
- 6c: Zündblock
- 7: Kondensator C
- 8: Ladegerät V
- 9: Widerstand R
- 10: Reaktorgehäuse
- 10a: Sichtfenster
- 11: (obere) Tür
- 12: (untere) Tür
- 13: Kammer/Komponentenraum
- 14: Kammer/Arbeitsraum
- 15: Zwischenboden
- 16: Verstelleinheit
- 17: Durchbruch/Durchgangsöffnung
- 18: Verstellzylinder
- 19: mobiles Traggestell
- 19a: Hubzylinder
- 20: Traverse
- 21: stationäres Traggestell
- 21a: Führungsschiene
- 21b: Spannsysteme
- 21c: Halterung
- 22: Steuerungsschaltschrank
- 22a: Bedienpanel
- 22b: Display
- 23: Lüfterrohr
- 24: Lüfter

- F: Flüssigkeit

## Patentansprüche

1. Verfahren zum materialselektiven Zerlegen eines aus mehreren Werkstücken oder Bestandteilen zusammengesetzten Recyclinggutes in wiederverwertbare Materialien mittels des elektrohydraulischen Effektes, **dadurch gekennzeichnet, dass**
- in einem mit einer Flüssigkeit befüllten Behälter (2) mittels einer Impulsstromquelle (7) innerhalb einer Unterwasserfunkenstrecke zwischen einer behälterbodenseitigen Elektrode (4b) und einer Anzahl von gegen diese zeigenden behälterdeckelseitigen Elektroden (5) eine Stoßentladung mit einer mittleren Feldstärke kleiner oder gleich 5kV/mm und
- eine Impuls- oder Entladungsenergie zwischen 300J und 1200J oder einer Impuls- oder Entladungsenergie zwischen 200J und 1500J mittels jeder Elektrode (5), eines aus mehreren Elektroden (5) bestehenden Elektrodenysytems, im Wesentlichen in der Flüssigkeit erzeugt wird, wobei das Recyclinggut im Behälter (2) behälterbodenseitig teilweise in der Unterwasserfunkenstrecke einliegt,
- eine Wiederholfrequenz der Hochspannungsimpulse von kleiner oder gleich 10Hz eingestellt wird, wobei innerhalb der Wiederholfrequenz die Hochspannungsimpulse mit einer solchen Impulsanstiegszeit erzeugt werden, dass die Durchbruchspannung des flüssigen Mediums zeitlich weitgehend vor derjenigen der zu selektierenden, dielektrischen Materialien erreicht ist.

2. Verfahren nach Anspruch 1, bei dem eine Impulsdauer größer 1µs bei einer Impulsanstiegszeit des oder jedes Hochspannungsimpulses größer 500ns eingestellt wird.

3. Verfahren nach Anspruch 1 oder 2 zum Auftrennen von Akkumulatoren, insbesondere von Lithium-Ionen-Akkumulatoren, zum Ablösen verwertbarer Bestandteile von einer beschichteten Metallfolie, zum Zerlegen bestückter Leiterplatten oder zum Zerlegen von Elektroschrott, insbesondere elektrischer oder elektromechanischer Geräte, beispielsweise Schutzschalter, Schütze oder Steckverbinder, und/oder mit keramischen Bestandteilen versehenen Bauteilen, insbesondere Zündkerzen oder Kondensatoren.

4. Verfahren nach Anspruch 3, wobei die Leiterplatten zusammen mit zwischen diesen eingelegten feldführenden und feldverstärkenden Mittel, insbesondere Metallfolien, in den befüllten Behälter (2) eingebracht werden.

5. Vorrichtung (1) zur Durchführung des Verfahrens nach einem der Ansprüche 1 bis 4, **gekennzeichnet durch**
- einen mit einer Flüssigkeit befüllbaren Behälter (2) zur Aufnahme des Recyclinggut, und
- Mittel (7, 8) zur Erzeugung elektrischer Stoßentladungen in der Flüssigkeit, wobei ein mit einer Hochspannung beaufschlagbares Elektrodensystem mit einer Anzahl von Elektroden (5) dazu vorgesehen und eingerichtet ist, innerhalb der Unterwasserfunkenstrecke zwischen der behälterbodenseitigen Elektrode (4b) und der gegen diese zeigenden behälterdeckelseitigen Elektroden (5) eine Stoßentladung mit einer mittleren Feldstärke kleiner oder gleich 5kV/mm und
- eine Impuls- oder Entladungsenergie zwischen 300J und 1200J oder eine Impuls- oder Entladungsenergie zwischen 200J und 1500J je Elektrode (5) sowie eine Wiederholfrequenz der Hochspannungsimpulse von kleiner oder gleich 10Hz zu erzeugen.

6. Vorrichtung (1) nach Anspruch 5, wobei das Elektrodensystem bis zu fünfzig Elektroden (5), insbesondere bis zu zehn Elektroden (5), vorzugsweise bis zu drei Elektroden (5), aufweist.

7. Vorrichtung (1) nach Anspruch 5 oder 6, mit einem zylindrischen, vorzugsweise wandisolationsfreien, Behälter (2) mit einem eine Gegenelektrode enthaltenden oder darstellenden Behälterboden (4b) und mit einem trennbaren Behälterdeckel (4a), in den das Elektrodensystem mit mindestens einer Elektrode (5) integriert ist.

8. Vorrichtung (1) nach einem der Ansprüche 5 bis 7, mit einem Behältervolumen von kleiner oder gleich 300 I, insbesondere kleiner oder gleich 50 I, vorzugsweise zwischen 2 I und 40 I.

9. Vorrichtung nach einem der Ansprüche 5 bis 8, mit Mitteln (7, 8), vorzugsweise lediglich einem einzelnen Hochspannungskondensator (7), zur Erzeugung einer Hochspannung kleiner oder gleich 100 kV, vorzugsweise zwischen 30 kV und 50 kV.

10. Vorrichtung (1) nach einem der Ansprüche 5 bis 9, mit einem Impulsgenerator (7, 8), der dazu vorgesehen und/oder eingerichtet ist, eine Entladungsenergie des oder jedes Hochspannungsimpulses von größer 10 J und/oder eine Wiederholfrequenz der Hochspannungsimpulse von kleiner oder gleich 10 Hz einzustellen.

11. Vorrichtung (1) nach einem der Ansprüche 5 bis 10, mit einem den Behälter (2) aufnehmenden mobilen Reaktorgestell (19), das unter ein den Behälterdeckel (4a), vorzugsweise mit integriertem Elektrodensystem, aufnehmendes stationäres Reaktorgestell (21) verfahrbar ist.

12. Vorrichtung (1) nach Anspruch 11, mit einem Reaktorgehäuse (10) mit einer ersten unteren Gehäusekammer (14) zur Aufnahme des Reaktorgestells (19, 21) und mit einer zweiten oberen Gehäusekammer (13) zur Aufnahme der Mittel (7, 8) zur Erzeugung der elektrischen Stoßentladungen.

13. Vorrichtung (1) nach Anspruch 12, mit einem außerhalb des Reaktorgehäuses (10) an dieses angebundenen Steuer- und/oder Schaltschrank (22) mit einem Bedienpanel (22a) zur Betätigung der Mittel (7, 8) zur Erzeugung der elektrischen Stoßentladungen.

## Claims

1. A method for the material-selective decomposition of a recyclable material composed of a plurality of workpieces or components parts to obtain reusable materials by means of the electrohydraulic effect, **characterised in that**
- in a container (2) filled with a liquid, a pulse discharge with an average field strength of less than or equal to 5 kV/mm is generated substantially in the liquid by means of a pulsed current source (7) within an underwater spark gap between an electrode (4b) on the side of the container bottom and a number of electrodes (5) on the side of the container cover facing said electrode (4b), and
- a pulse or discharge energy within a range from 300 J to 1200 J or a pulse or discharge energy within a range from 200 J to 1500 J is generated substantially in the liquid by means of each electrode (5) of an electrode system consisting of a plurality of electrodes (5), wherein the recyclable material is partially enclosed in the underwater spark gap on the bottom side of the container (2),
- a repetition rate of the high-voltage pulses is set to a value less than or equal to 10 Hz, wherein, within the repetition rate, the high-voltage pulses are generated with such a pulse rise time that the breakdown voltage of the liquid medium is largely reached prior to that of the dielectric materials to be selected.

2. The method in accordance with Claim 1, wherein a pulse duration greater than 1 µs is set at a pulse rise time of the or each high-voltage pulse that is greater than 500 ns.

3. The method in accordance with Claim 1 or 2 for breaking apart rechargeable batteries, more particularly lithium-ion rechargeable batteries, for detaching usable component parts from a coated metal foil, for decomposing populated printed circuit boards or for decomposing electronic scrap, more particularly of electrical or electromechanical devices, for example, circuit breakers, contactors or connectors, and/or components provided with ceramic constituents, more particularly spark plugs or capacitors.

4. The method in accordance with Claims 3, wherein the printed circuit boards are introduced into the filled container (2) along with field-guiding and field-intensifying means, more particularly metal foils, that are inserted between said printed circuit boards.

5. An apparatus (1) for applying the method in accordance with any one of Claims 1 to 4, **characterised by**
- a container (2) which can be filled with a liquid and is intended to receive the recyclable material, and
- means (7, 8) for generating electric pulse discharges in the liquid, wherein an electrode system comprising a number of electrodes (5), to which electrode high voltage can be applied, is provided and configured to generate a pulse discharge with an average field strength of less than or equal to 5 kV/mm within the underwater spark gap between the electrode (4b) on the side of the container bottom and the electrodes (5) on the side of the container cover facing said electrode (4b), and
- to generate a pulse or discharge energy within a range from 300 J to 1200 J or a pulse or discharge energy within a range from 200 J to 1500 J per electrode (5) as well as to generate a repetition rate of the high-voltage pulses of less than or equal to 10 Hz.

6. The apparatus (1) in accordance with Claim 5, wherein the electrode system comprises up to fifty electrodes (5), more particularly up to ten electrodes (5), preferably up to three electrodes (5).

7. The apparatus (1) in accordance with Claim 5 or 6, comprising a cylindrical container (2) which is preferably free from wall insulation and which comprises a container bottom (4b) containing or representing a mating electrode and a separable container cover (4a), in which the electrode system comprising at least one electrode (5) is integrated.

8. The apparatus (1) in accordance with any one of Claims 5 to 7, comprising a container volume of less than or equal to 300 L, more particularly less than or equal to 50 L, preferably between 2 L and 40 L.

9. The apparatus in accordance with any one of Claims 5 to 8, comprising means (7, 8), preferably only a single high-voltage capacitor (7), for generating a high voltage of less than or equal to 100 kV, preferably between 30 kV and 50 kV.

10. The apparatus (1) in accordance with any one Claims 5 to 9, comprising a pulse generator (7, 8) which is provided and/or configured to set a discharge energy of the or each high-voltage pulse greater than 10 J and/or a repetition rate of the high-voltage pulses of less than or equal to 10 Hz.

11. The apparatus (1) in accordance with any one of Claims 5 to 10, comprising a mobile reactor rack (19) which receives the container (2) and is movable beneath a stationary reactor rack (21) which receives the container cover (4a), preferably with integrated electrode system.

12. The apparatus (1) in accordance with Claim 11, comprising a reactor housing (10) with a first lower housing chamber (14) for receiving the reactor rack (19, 21) and with a second upper housing chamber (13) for receiving the means (7, 8) for generating the electrical pulse discharges.

13. The apparatus (1) in accordance with Claim 12, comprising a control and/or switch cabinet (22) connected to the reactor housing (10) outside said reactor housing and comprising a control panel (22a) for actuating the means (7, 8) for generating the electrical pulse discharges.

## Revendications

1. Procédé de décomposition à sélection de matériaux d'un article à recycler composé de plusieurs pièces ou composants en des matériaux réutilisables au moyen de l'effet électrohydraulique, **caractérisé par le fait que**
- dans un récipient (2) rempli d'un liquide, une décharge électrique d'une intensité du champ électrique moyenne inférieure ou égale à 5 kV/mm et d'une énergie d'impulsion ou de décharge entre 300 J et 1 200 J ou d'une énergie d'impulsion ou de décharge entre 200 J et 1 500 J est produite au moyen d'une électrode (5) d'un système d'électrodes comprenant plusieurs électrodes (5)
- essentiellement dans le liquide au moyen d'une source de courant impulsionnel (7) au sein d'un éclateur immergé entre une électrode placée au fond du récipient (4b) et de plusieurs électrodes placées sur le couvercle du récipient (5) et orientées en sens contraire, où le l'article à recycler dans le récipient (2) est mis au fond du récipient partiellement dans l'éclateur immergé,
- une fréquence de répétition des impulsions haute tension inférieure ou égale à 10 Hz est réglée, où les impulsions haute tension à l'intérieur de la fréquence de répétition sont produites avec un temps de transition des impulsions permettant d'atteindre la tension de claquage du milieu liquide bien avant ceux des matériaux diélectriques à sélectionner.

2. Procédé selon la revendication 1, où une durée d'impulsion est réglée à plus de 1 µs pour un temps de transition des impulsions de la ou de chaque impulsion supérieur à 500 ns.

3. Procédé selon la revendication 1 ou 2 de séparation des batteries, et notamment des batteries lithium-ion, de détachement des composants réutilisables d'une feuille métallique enduite, de décomposition des circuits imprimés chargés ou de décomposition des déchets électriques, et notamment de l'équipement électrique ou électromécanique, par exemple des disjoncteurs, des contacteurs et des connecteurs et/ou des éléments pourvus de composants céramiques, notamment des bougies d'allumage ou des condensateurs.

4. Procédé selon la revendication 3, où les circuits imprimés, avec le média conduisant et déplaçant le champ placé entre eux, notamment les feuilles métalliques, sont introduits dans le récipient rempli (2).

5. Dispositif (1) pour la mise en oeuvre du procédé selon une des revendications 1 à 4, **caractérisé par**
- un récipient pouvant être rempli d'un liquide (2) pour recevoir l'article à recycler, et
- un média (7, 8) pour produire des décharges électriques dans le liquide, où un système d'électrodes alimenté en haute tension avec un nombre d'électrodes (5), prévu et aménagé pour produire au sein de l'éclateur submergé, entre l'électrode (4b) placée au fond du récipient et les électrodes (5) placées sur le couvercle du récipient et orientées en sens contraire, une décharge électrique d'une intensité du champ électrique inférieure ou égale à 5 kV/mm et
- une énergie d'impulsion ou de décharge entre 300 J et 1 200 J ou une énergie d'impulsion ou de décharge entre 200 J et 1 500 J par électrode (5), ainsi qu'une fréquence de répétition des impulsions haute tension inférieure ou égale à 10 Hz.

6. Dispositif (1) selon la revendication 5, où le système d'électrodes présente jusqu'à cinquante électrodes (5), notamment jusqu'à dix électrodes (5), de préférence jusqu'à trois électrodes (5).

7. Dispositif (1) selon la revendication 5 ou 6, avec un récipient (2) cylindrique, de préférence avec des parois non isolées, avec un fond de récipient (4b) comportant une contre-électrode et avec un couvercle de récipient (4a) séparable dans lequel est intégré le système d'électrodes avec au moins une électrode (5).

8. Dispositif (1) selon une des revendications 5 à 7, avec un volume de récipient inférieur ou égal à 300 I, notamment inférieur ou égal à 50 I, de préférence entre 2 I et 40 I.

9. Dispositif selon une des revendications 5 à 8, avec des médias (7, 8), de préférence seulement avec un seul condensateur haute tension (7), de production d'une haute tension inférieure où égale à 100 kV, de préférence entre 30 kV et 50 kV.

10. Dispositif (1) selon une des revendications 5 à 9, avec un générateur d'impulsions (7, 8) prévu et/ou installé pour régler une énergie de décharge de la ou de chaque impulsion haute tension supérieure à 10 J et/ou une fréquence de répétition inférieure ou égale à 10 Hz.

11. Dispositif (1) selon une des revendications 5 à 10, avec un châssis mobile de réacteur (19) recevant le récipient (2), pouvant être déplacé sous un châssis fixe de réacteur (21) recevant le couvercle de récipient (4a), de préférence avec un système d'électrodes intégré.

12. Dispositif (1) selon la revendication 11, avec un boîtier de réacteur (10) avec une première chambre de boîtier inférieure (14) pour recevoir le châssis de réacteur (19, 21) et avec une deuxième chambre de boîtier supérieure (13) pour recevoir les médias (7, 8) pour produire des décharges électriques.

13. Dispositif (1) selon la revendication 12, avec une armoire de commande et/ou de contrôle (22) reliée de l'extérieur au boîtier de réacteur (10) avec un panneau de commande (22a) pour le guidage des médias (7, 8) pour produire des décharges électriques.
